(19) Europäisches Patentamt
European Patent Office
Office européen des brevets

(11) EP 2 837 653 B1

(12) **EUROPEAN PATENT SPECIFICATION**

(45) Date of publication and mention of the grant of the patent:
**06.05.2020 Bulletin 2020/19**

(21) Application number: **13775901.5**

(22) Date of filing: **02.04.2013**

(51) Int Cl.:
***C08J 9/00*** *(2006.01)*
***B01D 69/00*** *(2006.01)*
***B01D 71/32*** *(2006.01)*
***B01D 71/36*** *(2006.01)*
***C08J 9/24*** *(2006.01)*

(86) International application number:
**PCT/JP2013/060086**

(87) International publication number:
**WO 2013/153989 (17.10.2013 Gazette 2013/42)**

(54) **METHOD FOR PRODUCING FLUORORESIN MICROPOROUS FILM**

VERFAHREN ZUR HERSTELLUNG VON MIKROPORÖSEN FLUORHARZFILM

PROCÉDÉ DE PRODUCTION DE FILM MICROPOREUX DE RÉSINE FLUORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2012 JP 2012090127**

(43) Date of publication of application:
**18.02.2015 Bulletin 2015/08**

(73) Proprietor: **Sumitomo Electric Fine Polymer, Inc.**
**Sennan-gun, Osaka 590-0458 (JP)**

(72) Inventors:
- **HAYASHI, Fumihiro**
  **Sennan-gun**
  **Osaka 590-0458 (JP)**
- **MURATA, Aya**
  **Sennan-gun**
  **Osaka 590-0458 (JP)**
- **UNO, Atsushi**
  **Sennan-gun**
  **Osaka 590-0458 (JP)**

(74) Representative: **Boult Wade Tennant LLP**
**Salisbury Square House**
**8 Salisbury Square**
**London EC4Y 8AP (GB)**

(56) References cited:
**EP-A1- 2 067 814**
**EP-A2- 0 829 514**
**GB-A- 2 461 619**
**JP-A- H0 532 810**
**JP-A- 2009 516 067**
**JP-A- 2010 132 712**
**JP-U- S62 120 214**
**US-A1- 2007 117 929**
**US-A1- 2007 117 935**
**US-A1- 2008 227 880**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 837 653 B1

## Description

### Technical Field

The present invention relates to a method for producing a microporous membrane composed of a fluororesin such as polytetrafluoroethylene (hereinafter referred to as "PTFE"). Specifically, the present invention relates to a method for producing a microporous membrane that is produced by using fluororesin particles comprising an inside portion composed of PTFE and an outer portion as defined in the claims as a raw material and that has a narrow pore-size distribution and a smaller difference between a mean flow pore size and a maximum pore size. There is also disclosed herein a filter element using the fluororesin microporous membrane.

### Background Art

A porous resin membrane (microporous membrane) having through-pores with very small pore sizes can be produced by stretching a membrane obtained by baking fluororesin particles containing PTFE as a main component. Since such a microporous membrane is formed by using PTFE as a main component, the membrane has good chemical resistance and heat resistance and is used as a filtration membrane (filter) for filtering fine particles, or the like.

Such a fluororesin microporous membrane can be produced by, for example, a method including forming a membrane having a desired shape and desired dimensions using, as a raw material, fluororesin particles such as a PTFE fine powder or a PTFE dispersion, then baking the membrane by heating the membrane to a melting point of the fluororesin or higher to make the membrane substantially nonporous, and stretching the nonporous membrane to make the membrane porous. Examples of the fluororesin particles used as the raw material include products (emulsion polymerization products) including PTFE particles (primary particles) produced by emulsion polymerization of tetrafluoroethylene and having particles sizes of 0.15 to 0.35 $\mu$m. The term "PTFE dispersion" refers to a dispersion prepared by adjusting the concentration of such an emulsion polymerization product to a desired value. The term "PTFE fine powder" refers to a powder prepared by drying such an emulsion polymerization product and granulating the emulsion polymerization product so as to have a size of several hundreds of micrometers to several thousands of micrometers.

Furthermore, PTL 1 describes that a nonporous fluororesin thin membrane in which the generation of defects such as voids and cracks is suppressed is obtained by applying, onto a smooth film, a dispersion prepared by dispersing a fluororesin powder such as a PTFE fine powder in a dispersion medium, then drying the dispersion medium, and baking the fluororesin powder to completely melt the fluororesin powder. PTL 1 further describes that a fluororesin thin membrane (fluororesin microporous membrane) that has micropores and a high porosity and that is free of defects is obtained by stretching the above nonporous fluororesin thin membrane to make the membrane porous. EP 2067814 relates to a fluororesin membrane, fluororesin composite, porous fluororesin composite, processes for production of them, and a separation membrane element. GB 2461619 relates to a method of making a porous membrane using first and second PTFE resins.

US 2007/117935 relates to a core/shell polymer wherein the core comprises non-melt flowable PTFE and the shell comprises melt fabricable perfluoropolymer.

US 2007/117929 relates to a melt-mixed composition of non-melt flowable PTFE and melt fabricable perfluoropolymer.

JP H05 32810 relates to the production of a porous body to facilitate the formation of a thin PTFE porous body having a small pore diameter and a high porosity.

### Citation List

#### Patent Literature

PTL 1: Japanese Patent No. 4371176

### Summary of Invention

#### Technical Problem

The fluororesin microporous membrane obtained by the method described in PTL 1 has micropores and a high porosity and is free of defects. Therefore, the fluororesin microporous membrane is suitably used in, for example, a filtration membrane for filtering fine particles. However, in order to achieve a higher fractionation performance of a filtration membrane, a microporous membrane having a narrower pore-size distribution and a smaller difference between a mean flow pore size and a maximum pore size has been desired.

In the case where the pore size of a microporous membrane is adjusted to a very small value, for example,

100 nm or less, in fluororesin microporous membranes produced by existing methods described in PTL 1 etc., the distribution on the large pore-size side tends to be wide. In particular, in the case where the pore size is adjusted to 50 nm or less, the pore-size distribution tends to be wide, for example, the difference between the mean flow pore size and the maximum pore size becomes 30 nm or more or this difference becomes 100% or more of the mean flow pore size. When the pore-size distribution becomes wide in this manner, fine foreign matter cannot be removed with a high removal efficiency (sufficient fractionation performance). Accordingly, it is desirable to develop a fluororesin microporous membrane which has a smaller difference between the mean flow pore size and the maximum pore size even in the case where the pore size is adjusted to a very small value.

An object of the present invention is to provide a method for producing a fluororesin microporous membrane having a narrow pore-size distribution and a small difference between the mean flow pore size and the maximum pore size as compared with fluororesin microporous membranes produced by existing methods. There is also described herein a filter element using the fluororesin microporous membrane. Solution to Problem

The inventors of the present invention conducted intensive studies in order to achieve the above objects. As a result, it was found that a microporous membrane having a narrow pore-size distribution and a small difference between a mean flow pore size and a maximum pore size can be obtained by forming a membrane using, as fluororesin particles of a raw material, PTFE particles having a structure in which the heat of fusion of PTFE is different between an inside portion (near the center) and an outer surface portion of each of the particles, or a structure in which the inside portion is composed of PTFE and the surface portion is composed of a tetrafluoroethylene/hexafluoropropylene copolymer (hereinafter referred to as "FEP") or a tetrafluoroethylene/perfluoroalkyl ether copolymer (hereinafter referred to as "PFA"), baking the membrane, and stretching the membrane. This finding led to the completion of the present invention.

The present invention provides a method for producing a fluororesin microporous membrane according to the claims appended hereto. There is also described herein a fluororesin microporous membrane which is a porous membrane obtained by forming fluororesin particles into a membrane having a particular shape and particular dimensions, baking the fluororesin particles together by heating the membrane to a melting point of the membrane or higher, and then stretching the membrane. Each of the fluororesin particles has a structure in which an inside portion of the particle is composed of one PTFE and an outer surface portion of the particle is composed of another PTFE, an FEP, or a PFA whose heat of fusion is lower than that of the one PTFE.

Examples of the fluororesin particles used as the raw material include fluororesin fine powders which are powders composed of fine fluororesin particles, and fluororesin dispersions which are emulsions obtained by dispersing fine fluororesin particles in a dispersion medium. In the case where the fluororesin is PTFE, examples of the fluororesin particles used as the raw material include PTFE molding powders and the PTFE fine powders produced by emulsion polymerization of tetrafluoroethylene. Note that, herein, the term "PTFE" refers to not only homopolymers of tetrafluoroethylene but also copolymers that contain tetrafluoroethylene as a main component and further contain other monomers in a range that does not impair the objects of the present invention, for example, modified PTFEs described below.

The fluororesin particles used for producing the fluororesin microporous membrane in the method of the present invention are characterized in that an inside portion and an outer surface portion of each of the particles are composed of different fluororesins. Specifically, the fluororesin particles are characterized in that the inside portion of each of the particles is composed of one PTFE, and the outer surface portion of the particle is composed of another PTFE, an FEP, or a PFA whose heat of fusion is lower than that of the one PTFE. That is, the outer surface portion of the particle is composed of a fluororesin having a relatively low heat of fusion, and the inside portion of the particle is composed of a PTFE having a relatively high heat of fusion. As a result of this difference in heat of fusion, the outer surface portion of the particle is composed of a fluororesin having a composition that is not easily crystallized, and a substantially central portion of the particle is composed of a PTFE having a composition that is easily crystallized. The inventors of the present invention found that, by using fluororesin particles having such a structure, the crystal growth dimensions can be limited, consequently, the size of pores formed in a stretching step can be more precisely controlled, and a microporous membrane having a narrow pore-size distribution and a small difference between the mean flow pore size and the maximum pore size can be obtained.

More specific examples of this structure include

a multilayer structure in which a particle includes a layer of the inside portion (near the center) composed of a PTFE and a layer of the outer surface portion composed of a fluororesin that is different from the PTFE constituting the layer of the inside portion, and the heat of fusion of the fluororesin constituting the layer of the outer surface portion is lower than the heat of fusion of the PTFE constituting the layer of the inside portion; and

a gradient structure in which the composition of a PTFE continuously changes from the center of a particle toward the outer surface portion of the particle such that the heat of fusion of the outer surface portion is decreased. Fluororesin particles having such a multilayer structure or gradient structure can be produced by the methods disclosed in, for example, Japanese Examined Patent Application Publication No. 37-4643 and Japanese Unexamined Patent Application Publication (Translation of PCT Application) No. 2009-516066.

There is also described herein a fluororesin microporous membrane in which each of the fluororesin particles includes a layer of the inside portion and a layer of the outer surface portion, and the layer of the outer surface portion is composed of an FEP, a PFA, or a modified PTFE which is a copolymer of hexafluoropropylene (HFP) or a perfluoroalkyl vinyl ether (PAVE) and tetrafluoroethylene where a copolymerization ratio of the HFP or the PAVE to the tetrafluoroethylene is 1/20 (molar ratio) or more.

An example of a method for making the heat of fusion of the outer surface portion of each of the fluororesin particles used as the raw material lower than that of the PTFE constituting the inside portion of the particle is a method in which the layer of the outer surface portion is constituted by an FEP, a PFA, or a modified PTFE which is a copolymer of HFP or a PAVE and tetrafluoroethylene where a copolymerization ratio of the HFP or the PAVE to the tetrafluoroethylene is 1/20 (molar ratio) or more. Alternatively, the inside portion of the particle may also be constituted by a modified PTFE, and the degree of modification (copolymerization ratio) in the inside portion of the particle and the degree of modification of the outer surface portion of the particle may be made different from each other. Thus, the heat of fusion of PTFE in the inside portion of the particle and the heat of fusion in the outer surface portion of the particle can be made different from each other. Specifically, the larger the degree of modification, the lower the degree of crystallinity and the heat of fusion tend to become. Therefore, by making the degree of modification (copolymerization ratio) on the outer surface portion relatively larger than that on the inside portion, the heat of fusion of the outer surface portion can be decreased.

A modified PTFE which is a copolymer of HFP having high heat resistance and tetrafluoroethylene may be hereinafter referred to as an FEP-modified PTFE. A modified PTFE which is a copolymer of a PAVE and tetrafluoroethylene may be hereinafter referred to as a PFA-modified PTFE.

Another example of a method for making the heat of fusion of the outer surface portion of each of fluororesin particles used as the raw material lower than that of the PTFE constituting the inside portion of the particle is a method in which the outer surface portion and the inside portion of the particle are composed of the same type of PTFE (or a modified PTFE), and a molecular weight of the PTFE constituting the outer surface portion is made relatively higher than a molecular weight of the PTFE constituting the inside portion of the particle.

The heat of fusion of PTFE can be controlled by the crystallization tendency of the PTFE. The higher the crystallization tendency, the higher the heat of fusion becomes. The degree of crystallinity of PTFE can be controlled by, for example, changing the molecular weight of the PTFE, or annealing conditions after a PTFE nonporous membrane is formed. Accordingly, by making the molecular weight of PTFE constituting the outer surface portion of the particle relatively higher than that of PTFE constituting the inside portion of the article, the crystallization tendency and the heat of fusion of the PTFE constituting the inside portion and the crystallization tendency and the heat of fusion of the PTFE constituting the outer surface portion can be made different from each other. Specifically, the higher the molecular weight, the lower the crystallization tendency and the heat of fusion tend to become. Therefore, by making the molecular weight of PTFE constituting the outer surface portion of the particles relatively larger than that of PTFE constituting the inside portion thereof, the crystallization tendency and the heat of fusion of the outer surface portion can be made lower than those of the inside portion.

There is also described herein a fluororesin microporous membrane in which, in heat-flux differential scanning calorimetry (DSC measurement) of the fluororesin particles, the heat-flux differential scanning calorimetry including
heating from room temperature to 100°C at a rate of 50 °C/min,
heating from 100°C to 365°C at a rate of 10 °C/min (referred to as a "first step"),
cooling from 365°C to 350°C at a rate of -10 °C/min,
holding at 350°C for 5 minutes,
cooling from 350°C to 330°C at a rate of -10 °C/min,
cooling from 330°C to 305°C at a rate of -1 °C/min (referred to as a "second step"),
cooling from 305°C to 100°C at a rate of -50 °C/min, and
heating from 100°C to 365°C at a rate of 10 °C/min (referred to as a "third step") in that order,
two melting point peaks having a difference of 15°C or more are observed when heating from 100°C to 365°C is performed for the second time (in the third step).

As described above, each of the fluororesin particles used in the method of the present invention includes one PTFE constituting the inside portion of the particle and having a high heat of fusion and another PTFE (also including a modified PTFE), an FEP, or a PFA constituting the outer surface portion of the particle and having a heat of fusion lower than that of the one PTFE. Accordingly, in the third step of the DSC measurement described above, two melting point peaks are usually observed. In particular, fluororesin particles in which the difference between the two melting point peaks observed in the third step is 15°C or more are preferably used because the effects of the present invention become more significant.

For example, in the case where fluororesin particles whose outer surface portions are composed of a modified PTFE having a heat of fusion lower than that of a PTFE constituting the inside portion of the particles are used, it is preferable to use fluororesin particles whose unbaked raw material has two clear peaks, namely, a peak at 340°C or higher due to the PTFE and a peak at 325°C or lower due to the modified PTFE. In the case where fluororesin particles

whose outer surface portions are composed of a modified PTFE, an FEP, or a PFA are used, it is preferable to use fluororesin particles whose baked raw material has two clear peaks, namely, a peak at 330°C or higher due to a PTFE and a peak at 310°C or lower due to the modified PTFE, the FEP, or the PFA.

Examples of a method for forming fluororesin particles into a particular shape and particular dimensions include paste extrusion and a method described in PTL 1, that is, a method including applying, onto a flat plate, a dispersion prepared by dispersing fluororesin particles in a liquid (dispersion medium) to form a membrane, and removing the dispersion medium by drying. In general, PTFE has a high melt viscosity and cannot be subjected to melt extrusion. Furthermore, it is difficult to prepare a solution of PTFE. Accordingly, in this case, the above methods are usually employed. However, for example, in the case where the outer surface portions of fluororesin particles are composed of a PFA, an FEP, or a modified PTFE having a high copolymerization ratio (degree of modification), all of which have thermal plasticity, melt extrusion can be performed and thus the fluororesin particles may be formed by melt extrusion.

After a membrane is prepared by the forming, the membrane is heated to a temperature equal to or higher than the melting point of the fluororesin constituting the membrane. As a result of this heating, the particles of the fluororesin are baked and melted. Thus, a fluororesin membrane that is nonporous (fluororesin nonporous membrane) is prepared. The term "fluororesin nonporous membrane" refers to a membrane that substantially does not have a pore penetrating through the membrane. Specifically, a membrane having a Gurley seconds of 5,000 seconds or more is preferable.

The fluororesin nonporous membrane thus obtained is stretched in order to make the membrane porous. Before the stretching, annealing is preferably performed by a method in which a temperature is increased to the melting point of the fluororesin or higher and slow cooling is then performed by gradually decreasing the temperature to a crystal melting point or lower or a method in which heating is performed at a temperature that is slightly lower than the melting point of the fluororesin for a certain period of time (hereinafter may be referred to as "constant-temperature treatment"). The annealing can be performed by the same method as that described in PTL 1.

By performing annealing, the degree of crystallinity of PTFE disposed near the center of each of the particles can be saturated before stretching, and a membrane can be produced with a higher repeatability of the pore size. In the crystallization process, the lower the slow cooling rate or the longer the time of the constant-temperature treatment, the higher the degree of crystallinity and the higher the heat of fusion tend to become. On the other hand, the higher the slow cooling rate or the shorter the time of the constant-temperature treatment, the lower the degree of crystallinity and the lower the heat of fusion tend to become.

The stretching may be either uniaxial stretching or biaxial stretching, and biaxial stretching is preferable. Pores are formed in the fluororesin nonporous membrane by the stretching. With an increase in the magnitude of stretching, the size of the pores is increased and the mean flow pore size is also increased. Accordingly, this stretching is performed to the extent that a desired mean flow pore size is obtained. The temperature of the stretching is preferably 80°C or lower and more preferably 30°C or lower.

The fluororesin microporous membrane obtained as described above has a narrow pore-size distribution and a small difference between the mean flow pore size and the maximum pore size. As a result, the fluororesin microporous membrane can be used as a filtration membrane that can reliably remove fine particles and that achieves a high removal efficiency. Thus, a high efficiency of removing fine particles can be achieved by using the fluororesin microporous membrane as a filtration membrane for removing fine particles.

The method of the present invention provides a fluororesin microporous membrane in which a mean flow pore size is 50 nm or less, and a difference between the mean flow pore size and a maximum pore size is less than 15 nm.

In order to reliably remove fine particles and to achieve a high removal efficiency, it is desirable that the mean flow pore size of a microporous membrane be small, the pore-size distribution be narrow, and the difference between the mean flow pore size and the maximum pore size be small (dimensional accuracy be high). The mean flow pore size is 50 nm or less and the difference between the mean flow pore size and the maximum pore size is less than 15 nm. This is because, in this case, the dimensional accuracy is high, and it is possible to further increase the effect that fine particles can be reliably removed and a high efficiency of removing fine particles is achieved.

Herein, the mean flow pore size is determined as follows. A relationship between a differential pressure applied to a membrane and a flow rate of air permeating through the membrane is measured in the case where the membrane is dry and the case where the membrane is wet with a liquid by a bubble point method (ASTM F316-86, JIS K3832) using a pore-size distribution measuring device or the like. The resulting graphs obtained in these cases are respectively referred to as a dry curve and a wet curve. A half-dry curve that represents 1/2 of the flow rate of the dry curve is drawn. A differential pressure at an intersection of the half-dry curve and the wet curve is denoted by P (Pa). The mean flow pore size is a value of d (nm) represented by a formula $d = c\gamma/P$ (where c represents a constant of 2,860 and $\gamma$ represents a surface tension (dynes/cm) of the liquid).

The maximum pore size is a value measured by the above-described bubble point method using a pore-size distribution measuring device or the like. Specifically, when an air pressure applied to one surface of a membrane is increased in a state where the entire surface of the membrane is wet with a liquid, a pressure (minimum pressure) at which the capillarity of the membrane is exceeded and permeation of air is started is measured. This minimum pressure

is represented by P1. The maximum pore size is calculated from the following formula of maximum pore size = $c\gamma/P1$. Recently, Porous Materials, Inc. (PMI) has developed a new bubble point method in which two liquids are used in combination. Pore sizes of 1 nm to several tens of nanometers can be measured by this method (Internet: for example, pmiapp.com/products/liquid-liquid-porometer.html).

There is also described herein a fluororesin microporous membrane in which a value of (maximum pore size - mean flow pore size)/mean flow pore size is 0.5 or less. It is more preferable that the difference between the mean flow pore size and the maximum pore size be 50% or less of the mean flow pore size because the effect described above becomes still more significant and finer particles can be removed with a high removal efficiency.

There is also described herein a fluororesin microporous membrane in which a permeability index represented by thickness (nm)/[(mean flow pore size (nm))$^2$ × Gurley seconds] is 0.01 or more. The fluororesin microporous membrane of the method of the present invention has a good porosity. When the fluororesin microporous membrane of the method of the present invention is used as a filtration membrane, a high processing speed can be obtained. The permeability index represented by the above formula is an index that represents the magnitude of porosity. The use of a fluororesin microporous membrane having a permeability index of 0.01 or more as a filtration membrane is preferable because the flux (flow rate) of a liquid that permeates through the membrane can be increased and a high processing speed can be obtained.

A method for easily producing the fluororesin microporous membrane is provided by the present invention. In particular, the present invention provides a method for producing a fluororesin microporous membrane comprising:

> a membrane formation step of forming fluororesin particles into a membrane having a particular shape and particular dimensions;
> a baking step of baking the fluororesin particles together by heating the membrane obtained in the membrane formation step to a melting point of the membrane or higher to form a nonporous membrane; and
> a stretching step of stretching the nonporous membrane to make the nonporous membrane porous,
> wherein: an inside portion of each of the fluororesin particles is composed of one PTFE and an outer surface portion of the particle is composed of another PTFE, an FEP, or a PFA whose heat of fusion is lower than that of the one PTFE, and a mean flow pore size of the fluororesin microporous membrane is 50 nm or less, and a difference between the mean flow pore size and a maximum pore size of the fluororesin microporous membrane is less than 15 nm.

This production method is characterized in that fluororesin particles used as a raw material have a structure in which the heat of fusion of a fluororesin constituting an outer surface portion of each of the particles is lower than the heat of fusion of a PTFE constituting an inside portion (near the center) of the particle. Examples of the fluororesin constituting the surface portion include high-molecular-weight PTFEs, the modified PTFEs described above, FEPs, and PFAs. In the case where the fluororesin constituting the surface portion is a high-molecular-weight PTFE or a modified PTFE, the membrane formation step, the baking step, and the stretching step can be performed as in the case where an existing PTFE porous membrane is produced. For example, paste extrusion or the method described in PTL 1, the method including the use of a fluororesin dispersion, can be employed. In the case where the fluororesin constituting the surface portion is an FEP or a PFA, melt extrusion can be employed instead of paste extrusion. Alternatively, the method described in PTL 1, the method including the use of a fluororesin dispersion, can also be employed.

The fluororesin microporous membrane of the method of the present invention has a narrow pore-size distribution and a smaller difference between the mean flow pore size and the maximum pore size, and thus can be suitably used as a filter for removing fine particles. In the case where the fluororesin microporous membrane is used as a filter, for example, in order to provide a mechanical strength or to facilitate handing, the fluororesin microporous membrane is preferably bonded to a porous support and used as a porous resin-membrane composite. There is also described herein a filter element including the fluororesin microporous membrane being used as a filtration membrane.

There is also described herein a fluororesin porous membrane obtained by stretching a membrane at a melting point of the membrane or lower, the membrane being produced by melt-extruding fluororesin particles that can be melt-extruded so as to have a particular shape and particular dimensions, in which each of the fluororesin particles has a structure in which an inside portion of the particle is composed of one PTFE and an outer surface portion of the particle is composed of another PTFE, an FEP, or a PFA whose heat of fusion is lower than that of the one PTFE.

As described above, in the case of fluororesin particles each having a structure in which a PTFE constituting the inside portion (near the center) of the particle and another PTFE constituting the outer surface portion of the particle have different values of heat of fusion, where the outer surface portion of the particle is composed of a PFA, an FEP, or a modified PTFE having a high degree of modification, all of which have thermal plasticity, the fluororesin particles can be melt-extruded. A fluororesin microporous membrane obtained by melt-extruding such fluororesin particles that can be melt-extruded to form a membrane having a particular shape and particular dimensions, and then stretching the membrane to make the membrane porous.

Examples of the modified PTFE having a high degree of modification include copolymers of HFP or a PAVE and tetrafluoroethylene where a copolymerization ratio of the HFP or the PAVE to the tetrafluoroethylene is 1/20 (molar ratio) or more. In particular, examples thereof include copolymers of HFP or a PAVE and tetrafluoroethylene where the copolymerization ratio is 1/10 (molar ratio) or more. Examples of the membrane formed so as to have a particular shape and particular dimensions include sheet-like membranes, tubular membranes, and membranes having a special cross section, such as a sealing strip.

There is also described herein a coated electric wire coated with the fluororesin porous membrane described above in an insulating manner. Fluororesins have a low dielectric constant. By making such fluororesins porous, the dielectric constant is further decreased. Thus, fluororesin membranes that have been made porous are preferably used in coating of electric wires.

Hitherto, this coating of electric wires has been conducted by a method in which a tape-like porous fluororesin membrane, specifically, a stretched PTFE membrane is wound around an electric wire. A coated electric wire as described herein can be produced by coating an electric wire with a tubular fluororesin microporous membrane obtained by melt-extruding fluororesin particles that can be melt-extruded to form a tube, and stretching the tube at the melting point of the fluororesin or lower. According to this coating method, continuous forming by melt extrusion can be performed. Thus, coating of an electric wire can be performed at a very low cost as compared with existing methods. Advantageous Effects of Invention

The fluororesin microporous membrane of the method of the present invention has a narrow pore-size distribution and a small difference between the mean flow pore size and the maximum pore size as compared with fluororesin microporous membranes produced by existing methods. Accordingly, when the fluororesin microporous membrane of the present invention is used as a filtration membrane, fine foreign matter can be removed at a high efficiency. This fluororesin microporous membrane can be easily produced by the production method of the present invention. Furthermore, the filter element in which the fluororesin microporous membrane is used as a filtration membrane can remove fine foreign matter at a high efficiency.

Brief Description of Drawings

[Fig. 1] Figure 1 is a DSC chart obtained in Example 1.
[Fig. 2] Figure 2 is a DSC chart obtained in Example 2.
[Fig. 3] Figure 3 is a DSC chart obtained in Comparative Example 2.
[Fig. 4] Figure 4 is a cross-sectional view that schematically illustrates a state in which an electric wire is coated with a fluororesin porous membrane in an insulating manner.

Description of Embodiments

Specific embodiments for carrying out the present invention will now be described.

Fluororesin particles that are a raw material of a fluororesin microporous membrane of the method of the present invention are characterized in that the heat of fusion of a fluororesin constituting an outer surface portion (outside) of each of the particles and the heat of fusion of a fluororesin constituting an inside portion (near the center) of the particle are different from each other. The heat of fusion of the particles is preferably, as a whole, in the range of 17 to 60 J/g. The heat of fusion is more preferably in the range of 20 to 50 J/g, and still more preferably in the range of 23 to 45 J/g. When the heat of fusion is in the above range, a higher porosity can be obtained (that is, the permeability index can be increased) even in the case where the mean flow pore size is the same. Herein, the heat of fusion is measured by a method described in Examples below using a heat-flux differential scanning calorimeter.

A modified PTFE which is a copolymer of HFP and tetrafluoroethylene and a modified PTFE which is a copolymer of a PAVE and tetrafluoroethylene, the modified PTFEs being examples of PTFE, are respectively represented by structural formula (I) and structural formula (II) below.

[Chem. 1]

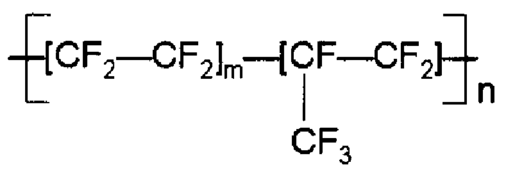

(I)

[Chem. 2]

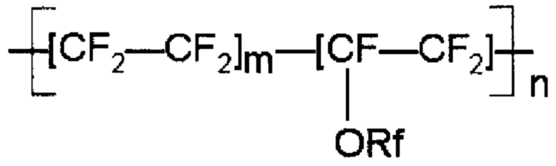

(II)

In structural formulae (I) and (II), m is 20 or less, preferably 10 or less. When m exceeds 20, a main monomer constituting each of the copolymers is tetrafluoroethylene, and the melting point of the copolymer is relatively high, that is, 320°C or higher. In such a case (in particular, in the case where m is 100 or more), the copolymer has a high melt viscosity and is difficult to be subjected to melt extrusion. Such a copolymer is distinguished from an FEP and a PFA, which are thermoplastic resins that can be melt-extruded.

In structural formulae (I) and (II), n represents the degree of polymerization. The range of n is not particularly limited. However, a copolymer having a molecular weight of 500,000 to 20,000,000 is usually used as the raw material of the present invention. When the molecular weight is excessively high, the porosity (i.e., permeability index) tends to decrease. When the molecular weight is excessively low, for example, pinholes tend to be formed and the resulting membrane tends to be easily torn during stretching. In structural formula (II), Rf represents a perfluoroalkyl group, and is preferably a perfluoropropyl $-C_3F_7$ having 3 carbon atoms or a perfluoromethyl $-CF_3$ having 1 carbon atom.

The copolymer contained in the fluororesin microporous membrane of the present invention may be one obtained by copolymerizing another monomer in addition to HFP or a PAVE within a range that does not impair the objects of the present invention. Alternatively, the copolymer may be one obtained by copolymerizing HFP and a PAVE.

The membrane formation step of fluororesin particles (step of forming a nonporous membrane) in the method of the present invention can be performed by, for example, a method described below.

(1) A method in which a lubricant is added to a PTFE fine powder, the resulting mixture is then subjected to paste extrusion molding to form a sheet or a tube, and the sheet or the tube is rolled as required.

(2) A method in which a PTFE fine powder is formed into a cylinder by compression molding, the cylinder is then heated to a melting point or higher, and a thin film having a thickness of about 20 μm is then produced by cutting while rotating the cylinder.

(3) A method in which a fluororesin dispersion is applied (cast) onto a smooth foil, a dispersion medium is then dried, and the resulting membrane is baked by further heating the membrane to a melting point of the polymer or higher (that is, the method described in PTL 1). According to this method, the generation of defects such as voids in the resulting fluororesin nonporous membrane can be significantly suppressed. Furthermore, when this method (casting method) is employed, the membrane does not have orientation, is isotropic and homogenous, and does not shrink or deform in stretching. As a result, a homogenous microporous membrane can be obtained.

The PTFE fine powder used in the method (1) is a powder (diameter: 300 to 600 μm) obtained by coagulating a particle latex (particle size: 150 to 350 nm), conducting drying, and conducting granulation, the particle latex being produced by emulsion polymerization of tetrafluoroethylene (also including a monomer to be copolymerized in some cases). In the emulsion polymerization, while tetrafluoroethylene monomer is polymerized in water, substantially spherical particles (primary particles) are grown until the particle size becomes about 150 to 350 nm. In this particle growth process, for example, by increasing the concentration of tetrafluoroethylene or decreasing the concentration of a polymerization inhibitor, PTFE primary particles whose inside portion has a low molecular weight and whose outside portion has a high molecular weight can be produced.

The PTFE fine powder used in the method (2) is a powder the same as that used in the method (1).

The fluororesin dispersion used in the method (3) is produced by, for example, emulsion polymerization of a fluoromonomer (also including a monomer to be copolymerized in some cases). In the case where the fluororesin dispersion is a dispersion of a modified PTFE, this dispersion can be produced by emulsion polymerization of HFP or a PAVE and tetrafluoroethylene. For example, from the middle of a process in which substantially spherical particles (primary particles) are grown until the particle size becomes about 150 to 350 nm while tetrafluoroethylene is emulsion-polymerized in water, HFP or a PAVE is added as a comonomer. Thus, it is possible to produce primary particles each having a structure in which an inside portion of the particles is composed of PTFE and an outside portion of the particles is composed of an FEP-modified PTFE or a PFA-modified PTFE. After a latex containing particles having a primary particle size of about 150 to 350 nm is obtained as described above, the latex is concentrated. Thus, a dispersion of a modified PTFE can be obtained.

The dispersion medium of the fluororesin dispersion is usually a water-based medium such as water. The

content of the fluororesin particles in the dispersion is preferably in the range of 20% to 50% by volume. The dispersion may further contain a nonionic water-soluble polymer having a molecular weight of 10,000 or more. This is preferable because the water-soluble polymer does not affect dispersion of the resulting fluororesin dispersion and is gelled during drying of water to form a membrane. As a result, it is possible to obtain a fluororesin thin membrane (fluororesin nonporous membrane) in which the generation of defects is further suppressed. Examples of the nonionic water-soluble polymer having a molecular weight of 10,000 or more include polyethylene oxide and polyvinyl alcohol.

The smooth foil used in the method (3) is a smooth film in which pores and irregularities are not observed on a surface thereof, the surface contacting the dispersion. The smooth film is preferably a metal foil which has flexibility and which can be easily removed by being dissolved with an acid or the like after a membrane is formed thereon. Among metal foils, an aluminum foil is particularly suitable in view of flexibility, the ease of removal by dissolution, and the ease of availability.

The thickness of the smooth foil is not particularly limited. However, the smooth foil preferably has such a thickness that allows the foil to have flexibility. In the case where the smooth foil is removed after the formation of a membrane, the smooth foil preferably has such a thickness that the removal of the foil is not difficult. For example, in the case where the smooth foil is removed by dissolution, the smooth foil preferably has such a thickness that the foil is easily removed by dissolution.

In the method (3), the dispersion is cast on the smooth foil by, for example, a method of simple application, and the dispersion medium is then dried. The drying can be performed by heating the resulting smooth foil to a temperature close to the boiling point of the dispersion medium or a temperature equal to or higher than the boiling point. A membrane composed of a fluororesin is formed by the drying. This membrane is baked by being heated to a temperature equal to or higher than the melting point of the fluororesin. Thus, a fluororesin membrane that is nonporous (fluororesin nonporous membrane) can be obtained. The heating for drying and the heating for baking may be performed in the same step.

The fluororesin nonporous membrane obtained in the membrane formation step is preferably annealed. The annealing is performed by a method in which the temperature is increased to the melting point of a fluororesin constituting the nonporous membrane or higher, and slow cooling is then performed by gradually decreasing the temperature to a crystal melting point or lower, or a constant-temperature treatment. The slow cooing is performed at a cooling rate of, for example, 10 °C/min or less. The constant-temperature treatment is performed, for example, at a temperature 2°C to 10°C lower than a melting point peak of the fluororesin by holding the temperature for 30 minutes or more to 10 hours.

The stretching of the fluororesin nonporous membrane obtained in the membrane formation step (or obtained by performing the membrane formation step and further performing annealing) can be performed under the conditions similar to those in preparation of existing stretched PTFE. The stretching temperature is preferably 80°C or lower, more preferably 30°C or lower, and still more preferably 19°C or lower. When a casting method is employed for forming a fluororesin membrane, the membrane does not have orientation, is isotropic and homogenous, and does not shrink or deform in stretching. As a result, a homogenous fluororesin porous membrane (fluororesin microporous membrane) can be obtained.

A fluororesin porous resin-membrane composite further having a good mechanical strength can be produced by bonding the fluororesin microporous membrane produced by the method of the present invention to a porous support. Furthermore, this fluororesin porous resin-membrane composite can be easily handled during the use and processing thereof, as compared with the case of the fluororesin microporous membrane alone. Thus, the fluororesin porous resin-membrane composite is suitably used as a filtration membrane for filtering fine particles.

The fluororesin porous resin-membrane composite is obtained by bonding the fluororesin nonporous membrane to a porous support to prepare a composite, and then stretching the composite. The fluororesin nonporous membrane included in the composite is also stretched by the stretching and is formed into a fluororesin microporous membrane of the present invention.

The porous support provides the composite to a mechanical strength. On the other hand, when the composite is used as a filtration membrane, desirably, the porous support does not inhibit properties of the filtration membrane, for example, a processing capacity, a processing speed, and the like. Therefore, a porous body composed of PTFE which has a high mechanical strength, good chemical resistance, and good heat resistance is preferably used as the porous support. In addition, it is desirable that the pore size of the porous body be larger than the pore size of the fluororesin microporous membrane used in combination with the porous body and the porosity of the porous body be high. Specifically, preferably used is a PTFE porous body produced by stretching a PTFE membrane to form pores having a size of 100 nm or more and preferably 200 nm or more, the PTFE porous body having such a thickness that a sufficient mechanical strength is provided.

The fluororesin porous resin-membrane composite can be specifically produced through steps 1 to 4 described below.

Step 1: A dispersion prepared by dispersing fluororesin particles in a dispersion medium is applied onto a smooth

foil, and the dispersion medium is then dried. Furthermore, heating is performed to a melting point of the fluororesin or higher to bake the fluororesin particles. Thus, a fluororesin nonporous membrane is formed.

Step 2: Step 1 is repeated as required. Subsequently, a porous support is bonded onto the fluororesin nonporous membrane. The bonding between the fluororesin nonporous membrane and the porous support may be performed by using, as an adhesive, a resin having a melting point lower than that of PTFE, for example, PFA.

Step 3: After step 2, the smooth foil is removed to obtain a composite including the fluororesin nonporous membrane and the porous support. The method for removing the smooth foil is not particularly limited. When the smooth foil is a metal foil, for example, the smooth foil may be removed by dissolving with an acid or the like.

Step 4: The composite is stretched. As described above, annealing is preferably performed before stretching because the degree of crystallinity of the fluororesin before stretching can be saturated, and consequently, a high porosity (large permeability index) is obtained and a membrane can be produced with a higher repeatability of the pore size.

Figure 4 is a cross-sectional view that schematically illustrates a state in which an electric wire is coated with a fluororesin porous membrane as described herein in an insulating manner. In the figure, reference numeral 1 denotes an extruder, reference numeral 2 denotes a heating portion of a resin, reference numeral 3 denotes a resin-cooling zone, and reference numeral 4 denotes a stretching zone for making a resin porous. Reference numeral 5 denotes a molten fluororesin, reference numeral 6 denotes a solidified fluororesin by cooling, reference numeral 7 denotes a fluororesin that has been made porous by stretching, and reference numeral 8 denotes an electric wire to be coated.

The fluororesin 5 that is melted and extruded into a tubular shape by the extruder 1 and the heating portion 2 is cooled in the resin-cooling zone 3 and formed into a tube of the solidified fluororesin 6. The solidified fluororesin 6 is further stretched in the stretching zone 4 for making the resin porous and becomes the fluororesin 7 that has been made porous. The porous fluororesin 7 covers the electric wire 8. Since a linear velocity of the electric wire 8 is higher than a linear velocity of the fluororesins 6 and 7, necking of the fluororesins 6 and 7 occurs and the fluororesins 6 and 7 closely contact the electric wire 8 to cover the electric wire 8. The fluororesins 6 and 7 are drawn by the electric wire 8. As a result, stretching is caused in the stretching zone 4 for making the resin porous. The fluororesins 5, 6, and 7 are each a resin having the composition produced by the method of Claim 1.

EXAMPLES

First, methods for measuring a heat of fusion, air permeability (Gurley seconds), a mean flow pore size, a maximum pore size, and a permeability index in Examples and Comparative Examples will be described.

[Method for measuring heat of fusion]

The measurement of the heat of fusion was conducted by a method described below using a heat-flux differential scanning calorimeter (manufactured by Shimadzu Corporation; heat-flux differential scanning calorimeter DSC-50).

A sample (10 to 20 mg) is heated from room temperature to 100°C at a rate of 50 °C/min, and then heated to 365°C at a rate of 10 °C/min (first step). Next, the sample is cooled to 350°C at a rate of -10 °C/min, and held at 350°C for 5 minutes. Furthermore, the sample is cooled from 350°C to 330°C at a rate of -10 °C/min, and cooled from 330°C to 305°C at a rate of -1 °C/min (second step). Next, the sample is cooled from 305°C to 100°C at a rate of -50 °C/min, and then heated from 100°C to 365°C at a rate of 10 °C/min (third step). The sampling time is 0.5 sec/time. The amount of heat absorption in the first step is determined by integrating a section from 303°C to 353°C. The amount of heat generation in the second step is determined by integrating a section from 318°C to 309°C. The amount of heat absorption in the third step is determined by integrating a section from a starting point which is an end of an endothermic curve to a point spaced 48°C apart from the starting point. The amount of heat absorption in the third step is defined as the heat of fusion.

[Method for measuring air permeability (Gurley seconds)]

The air permeability was measured with an Oken-type air permeability tester (manufactured by Asahi Seiko Co., Ltd.) having a structure the same as that of a Gurley air permeability tester specified in JIS P 8117 (method for testing air permeability of paper and cardboard). The measurement results are represented in units of Gurley seconds.

[Method for measuring mean flow pore size]

The mean flow pore size was measured by a bubble point method (ASTM F316-86, JIS K3832) with a pore-size distribution measuring device (Perm-Porometer CFP-1500A: manufactured by Porous Materials, Inc.) using, as a liquid, GALWICK (propylene, 1,1,2,3,3,3-oxidized hexahydrofluoric acid; manufactured by Porous Materials, Inc.). The

mean flow pore size was determined as described above by the following formula.

$$\text{Mean flow pore size d } (\mu m) = c\gamma/P$$

(where c is 2,860 and $\gamma$ represents a surface tension (dynes/cm) of the liquid).

[Method for measuring maximum pore size]

The maximum pore size was measured by a bubble point method (ASTM F316-86, JIS K3832) with a pore-size distribution measuring device (Perm-Porometer CFP-1500A: manufactured by Porous Materials, Inc.) using, as a liquid, GALWICK (propylene, 1,1,2,3,3,3-oxidized hexahydrofluoric acid; manufactured by Porous Materials, Inc.). Specifically, the maximum pore size was determined as follows. When a gas pressure applied to one surface of a membrane is increased in a state where the entire surface of the membrane is wet with the liquid, a gas pressure (minimum pressure) at which the capillarity of the membrane is exceeded and permeation of the gas is started is measured. This minimum pressure is represented by P. The maximum pore size is calculated from the above formula d = $c\gamma/P$.

[Permeability index]

The permeability index is a value determined by using the following formula from the air permeability (Gurley seconds) and the mean flow pore size (nm) that are measured by the methods described above and a thickness (nm) of a collection layer measured by a method described below.

$$\text{Permeability index} = \text{thickness (nm) of collection layer}/[(\text{mean flow pore size (nm)})^2 \times \text{Gurley seconds}]$$

[Measurement of thickness of collection layer]

A fluororesin microporous membrane is infiltrated with isopropyl alcohol (IPA). Subsequently, the fluororesin microporous membrane is immersed in distilled water so that the IPA is not dried. Thus, the IPA is replaced by water. This fluororesin microporous membrane is immersed in a bath of liquid nitrogen, and is cut with a razor knife in liquid nitrogen. The fracture surface is observed with a scanning electron microscope (SEM), and a thickness of only a collection layer is measured. This thickness is defined as the thickness of the collection layer.

EXAMPLE 1

[Preparation of dispersion]

Tetrafluoroethylene was emulsion-polymerized to produce particles of a PTFE homopolymer in a reaction system. Subsequently, to the reaction system in which the particles were dispersed, a PAVE and tetrafluoroethylene were added such that m in formula (II) above was 20 or less, and polymerized to produce a PFA-modified PTFE. Thus, a dispersion was prepared, the dispersion being a dispersion liquid of particles each having a multilayer structure in which a central portion (inside portion: hereinafter referred to as "core") includes a layer composed of the PTFE homopolymer and an outer layer portion (outer surface portion: hereinafter referred to as "shell") includes a layer composed of the PFA-modified PTFE. A primary particle size of the particles was about 240 nm. The thickness of the shell (layer composed of the PFA-modified PTFE) was about 20 nm in terms of calculation. The solid content of the dispersion was adjusted to 20% by volume.

[Measurement of heat of fusion of particles in dispersion]

A fluororesin was extracted from this dispersion, and the heat of fusion of the fluororesin was measured by DSC. According to the results, in the first step, a peak at 321.7°C due to the composition of the shell and a peak at 342.9°C due to the PTFE homopolymer of the core were detected. In the third step, a peak at 304.3°C due to the composition of the shell and a peak at 328.2°C due to the PTFE homopolymer of the core were detected. The heat of fusion (in the third step) of the fluororesin extracted from the dispersion was 35.21 J/g (and the heat of fusion in the first

step was 63.9 J/g). The results of this DSC measurement (DSC chart) are shown in Fig. 1.

[Membrane formation step: Preparation of fluororesin nonporous membrane]

Next, an aluminum foil having a thickness of 50 μm was extended and fixed on a flat glass plate so that wrinkles were not formed. The dispersion prepared above was dropped on the aluminum foil. Subsequently, the fluororesin dispersion was spread so as to be uniform over the entire surface of the aluminum foil by sliding a stainless steel slide shaft (Stainless fine shaft, SNSF-type, outer diameter: 20 mm) manufactured by Nippon Bearing Co., Ltd. A step of drying the foil at 80°C for 60 minutes, a step of heating the foil at 250°C for one hour, and a step of heating the foil at 340°C for one hour were performed, and the foil was then naturally cooled. Thus, a fluororesin thin membrane (fluororesin nonporous membrane) fixed on the aluminum foil was formed. An average thickness of the fluororesin nonporous membrane was calculated from the difference in weight per unit area of the aluminum foil between before and after the formation of the fluororesin thin membrane, and the true specific gravity of the fluororesin (2.25 g/$cm^3$). The fluororesin nonporous membrane had an average thickness of about 2.4 μm.

Next, a four-fold diluted PFA dispersion was prepared by diluting a PFA dispersion 920 HP (manufactured by Du pont-Mitsui Fluorochemicals Co., Ltd.) four-fold in terms of volume with distilled water.

[Preparation of test piece (fluororesin porous resin-membrane composite)]

The fluororesin thin membrane fixed on the aluminum foil was extended and fixed on a flat glass plate so that wrinkles were not formed. The four-fold diluted PFA dispersion prepared above was dropped on the fluororesin thin membrane. Subsequently, while spreading the four-fold diluted PFA dispersion so as to be uniform over the entire surface of the aluminum foil by sliding the above-described stainless steel slide shaft manufactured by Nippon Bearing Co., Ltd., a stretched PTFE porous body (manufactured by Sumitomo Electric Fine Polymer, Inc., trade name: Poreflon FP-045-80 (mean flow pore size: 0.173 μm, porosity: 74%, Gurley seconds = 10.7 seconds) having a nominal pore size of 0.45 μm and a thickness of 80 μm was placed so as to cover the fluororesin thin membrane before the moisture was not dried.

Subsequently, a step of drying at 80°C for 60 minutes, a step of heating at 250°C for one hour, a step of heating at 320°C for one hour, and a step of heating at 317.5°C for 10 hours were performed, natural cooling was then performed. Thus, a composite was obtained in which the fluororesin nonporous membrane was bonded on the stretched PTFE porous body with a thermoplastic PFA having a melting point lower than that of PTFE, and the aluminum foil was further fixed thereon. Next, the aluminum foil was removed by dissolving with hydrochloric acid to prepare a test piece. The test piece had a Gurley seconds of 5,000 seconds or more. Ethanol was brought into contact with the test piece at room temperature from the fluororesin nonporous membrane side of the test piece. There were no pores through which the ethanol permeated. This result showed that the test piece was a fluororesin-membrane composite including a substantially nonporous membrane through which ethanol did not permeate.

[Stretching]

Next, three-fold stretching was performed using a special transverse stretching machine under the conditions of an inlet chuck width of 230 mm, an outlet of 690 mm, a length of a stretching zone of 1 m, and a line speed of 6 m/min at 25°C. Thus, a membrane sample was produced. The membrane sample had a mean flow pore size of 35 nm and a maximum pore size of 48 nm that were measured with a reagent GALWICK (propylene, 1,1,2,3,3,3-oxidized hexahydrofluoric acid: manufactured by Porous Materials, Inc.). The difference between the maximum pore size and the mean flow pore size was 13 nm, and (maximum pore size - mean flow pore size)/mean flow pore size was 37%. The Gurley seconds (permeation coefficient) was 120 seconds, the thickness of a collection layer was 1.6 μm, and the permeability index was 0.0109.

EXAMPLE 2

The preparation of a dispersion, the membrane formation step (preparation of a fluororesin nonporous membrane), the preparation of a fluororesin porous resin-membrane composite, and the stretching were conducted as in Example 1 except that the PAVE was changed to HFP. The measurements of the heat of fusion, the mean flow pore size, and the maximum pore size, etc. were conducted as in Example 1. The following results were obtained.

The primary particle size of particles in the dispersion was 240 nm, the thickness of the shell was about 50 nm (in terms of calculation), and the solid content of the dispersion was 20% by volume.

[Measurement of heat of fusion of particles in dispersion (DSC measurement)]

In the first step, a peak at 303.6°C due to the composition of the shell and a peak at 342.7°C due to a PTFE homopolymer of the core were detected.
In the third step, a peak at 290.9°C due to the composition of the shell and a peak at 327.9°C due to the PTFE homopolymer of the core were detected.
The heat of fusion (in the third step) of the fluororesin (PTFE) extracted from the dispersion was 39.8 J/g (and the heat of fusion in the first step was 66.3 J/g).
The results of this DSC measurement (DSC chart) are shown in Fig. 2.
The mean flow pore size was 29 nm, and the maximum pore size was 34 nm. Specifically, the difference between the maximum pore size and the mean flow pore size was 5 nm, and (maximum pore size - mean flow pore size)/mean flow pore size was 17%. The Gurley seconds (permeation coefficient) was 151 seconds, the thickness of a collection layer was 1.6 μm, and the permeability index was 0.0125.

COMPARATIVE EXAMPLE 1

The membrane formation step (preparation of a fluororesin nonporous membrane), the preparation of a fluororesin porous resin-membrane composite, and the stretching were conducted as in Example 1 except that a water-based dispersion 34JR (manufactured by Du pont-Mitsui Fluorochemicals Co., Ltd., primary particle size of particles: 250 nm) containing a PTFE homopolymer was used instead of the dispersion obtained by emulsion polymerization. The measurements of the heat of fusion, the mean flow pore size, and the maximum pore size, etc. were conducted as in Example 1. The following results were obtained.

[Measurement of heat of fusion of particles in dispersion (DSC measurement)]

In the first step, a single peak at 336.5°C due to the PTFE homopolymer of the core was detected.
In the third step, a single peak at 331°C due to the PTFE homopolymer was detected.
The heat of fusion (in the third step) of the fluororesin (PTFE) extracted from the dispersion was 53.4 J/g (and the heat of fusion in the first step was 69.8 J/g).
The mean flow pore size was 65 nm, and the maximum pore size was 85 nm. Specifically, the difference between the maximum pore size and the mean flow pore size was 20 nm, and (maximum pore size - mean flow pore size)/mean flow pore size was 31%. The Gurley seconds (permeation coefficient) was 46 seconds, the thickness of a collection layer was 1.6 μm, and the permeability index was 0.0082.

COMPARATIVE EXAMPLE 2

The membrane formation step (preparation of a fluororesin nonporous membrane), the preparation of a fluororesin porous resin-membrane composite, and the stretching were conducted as in Example 1 except that a water-based dispersion 31JR (manufactured by Du pont-Mitsui Fluorochemicals Co., Ltd., primary particle size of particles: 240 nm) containing a PTFE homopolymer was used instead of the dispersion obtained by emulsion polymerization. The measurements of the heat of fusion, the mean flow pore size, and the maximum pore size, etc. were conducted as in Example 1. The following results were obtained.

[Measurement of heat of fusion of particles in dispersion (DSC measurement)]

In the first step, a single peak at 340°C due to the PTFE homopolymer of the core was detected.
In the third step, a single peak at 330.7°C due to the PTFE homopolymer was detected (and a shoulder was detected at around 335°C).
The heat of fusion (in the third step) of the fluororesin (PTFE) extracted from the dispersion was 34.9 J/g (and the heat of fusion in the first step was 69.8 J/g).
The mean flow pore size was 38 nm, and the maximum pore size was 65 nm. Specifically, the difference between the maximum pore size and the mean flow pore size was 27 nm, and (maximum pore size - mean flow pore size)/mean flow pore size was 71%. The Gurley seconds (permeation coefficient) was 292 seconds, the thickness of a collection layer was 1.6 μm, and the permeability index was 0.0038.

[Table I]

| | | Example 1 | Example 2 | Comparative Example 1 | Comparative Example 2 |
|---|---|---|---|---|---|
| Structure of fluororesin particle (*1) | | Core: PTFE Shell: PFA-modified | Core: PTFE Shell: HFP-modified | PTFE | PTFE |
| Primary particle size (nm) | | 240 | 240 | 250 | 240 |
| First step | Melting point (°C) | Double peak 342.9 321.7 | Double peak 342.7 303.6 | Single peak 336.5 | Single peak 340 |
| | Difference in melting point (°C) | 21.2 | 39.1 | | |
| | Heat of fusion J/g | 63.9 | 66.3 | 69.8 | 69.8 |
| Third step | Melting point (°C) | Double peak 328.2 304.3 | Double peak 327.9 290.9 | Single peak 331 | Single peak 330.7 |
| | Difference in melting point (°C) | 23.9 | 37.0 | | |
| | Heat of fusion J/g | 35.2 | 39.8 | 53.4 | 34.9 |
| Mean flow pore size (nm) | | 35 | 29 | 65 | 38 |
| Maximum pore size (nm) | | 48 | 34 | 85 | 65 |
| Difference in pore size (nm) (*2) | | 13 | 5 | 20 | 27 |
| Pore size ratio (%) (*3) | | 37 | 17 | 31 | 71.1 |
| Gurley seconds | | 120 | 151 | 46 | 292 |
| Thickness of collection layer (μm) | | 1.6 | 1.6 | 1.6 | 1.6 |
| Permeability index | | 0.0109 | 0.0125 | 0.0082 | 0.0038 |

*1 The abbreviation "PTFE" represents a PTFE homopolymer. The abbreviation "PFA-modified" represents a PFA-modified PTFE. The abbreviation "HFP-modified" represents a HFP-modified PTFE.
*2 Difference in pore size: maximum pore size - mean flow pore size (nm)
*3 Pore size ratio: {(maximum pore size - mean flow pore size)/mean flow pore size} × 100 (%)

The above results show the following.

In Examples 1 and 2, in which fluororesin particles each including a shell (outer surface portion) and a core (inside portion) that were composed of different fluororesins were used, fluororesin microporous membranes having a mean flow pore size of 50 nm or less, a difference between the maximum pore size and the mean flow pore size (difference in pore size) of less than 15 nm, and a ratio {(maximum pore size - mean flow pore size)/mean flow pore size} × 100 of 50% or less were obtained.

In contrast, in Comparative Examples 1 and 2, in which fluororesin particles whose inside portion and outer surface portion were composed of the same PTFE homopolymer were used, the difference between the maximum pore size and the mean flow pore size (difference in pore size) was large, and a fluororesin microporous membrane having a difference in pore size of less than 15 nm was not obtained. This tendency became significant with a decrease in the mean flow pore size. In Comparative Example 2, in which the mean flow pore size was 50 nm or less (38 nm), the ratio {(maximum pore size - mean flow pore size)/mean flow pore size} × 100 significantly exceeded 50% and was 71%.

In each of Comparative Examples 1 and 2, the permeability index was significantly lower than 0.01. In contrast, in each of Examples 1 and 2, the permeability index was 0.01 or more. These results show that the porosity is high. That is, these results show that when the fluororesin microporous membranes in Examples 1 and 2 are used as filtration membranes, a high processing flow rate can be obtained.

## Claims

1. A method for producing a fluororesin microporous membrane comprising:

    a membrane formation step of forming fluororesin particles into a membrane having a particular shape and particular dimensions;
    a baking step of baking the fluororesin particles together by heating the membrane obtained in the membrane formation step to a melting point of the membrane or higher to form a nonporous membrane; and
    a stretching step of stretching the nonporous membrane to make the nonporous membrane porous, wherein:

        an inside portion of each of the fluororesin particles is composed of one polytetrafluoroethylene and an outer surface portion of the particle is composed of another polytetrafluoroethylene, a tetrafluoroethylene/hexafluoropropylene copolymer, or a tetrafluoroethylene/perfluoroalkyl ether copolymer whose heat of fusion is lower than that of the one polytetrafluoroethylene, and
        a mean flow pore size of the fluororesin microporous membrane is 50 nm or less, and a difference between the mean flow pore size and a maximum pore size of the fluororesin microporous membrane is less than 15 nm, wherein the pore size is measured as described in the description.

2. The method for producing a fluororesin microporous membrane according to Claim 1, wherein each of the fluororesin particles includes a layer of the inside portion and a layer of the outer surface portion, and the layer of the outer surface portion is composed of a tetrafluoroethylene/hexafluoropropylene copolymer, a tetrafluoroethylene/perfluoroalkyl ether copolymer, or a modified polytetrafluoroethylene (PTFE) which is a copolymer of hexafluoropropylene (HFP) or a perfluoroalkyl vinyl ether (PAVE) and tetrafluoroethylene where a copolymerization ratio of the HFP or the PAVE to the tetrafluoroethylene is 1/20 (molar ratio) or more.

3. The method for producing a fluororesin microporous membrane according to Claim 1 or 2, wherein, in heat-flux differential scanning calorimetry of the fluororesin particles, the heat-flux differential scanning calorimetry including heating from room temperature to 100°C at a rate of 50 °C/min, heating from 100°C to 365°C at a rate of 10 °C/min, cooling from 365°C to 350°C at a rate of -10 °C/min, holding at 350°C for 5 minutes, cooling from 350°C to 330°C at a rate of -10 °C/min, cooling from 330°C to 305°C at a rate of -1 °C/min, cooling from 305°C to 100°C at a rate of -50 °C/min, and heating from 100°C to 365°C at a rate of 10 °C/min in that order, two melting point peaks having a difference of 15°C or more are observed when heating from 100°C to 365°C is performed for the second time.

4. The method for producing a fluororesin microporous membrane according to Claim 1, wherein a value of (maximum pore size - mean flow pore size)/mean flow pore size of the fluororesin microporous memberane is 0.5 or less.

5. The method for producing a fluororesin microporous membrane according to Claim 4, wherein a permeability index represented by thickness (nm)/[(mean flow pore size (nm))$^2$ $\times$ Gurley seconds] of the fluororesin microporous membrane is 0.01 or more.

## Patentansprüche

1. Verfahren zum Herstellen einer mikroporösen Fluorharzmembran, umfassend:

    einen Membranbildungsschritt des Formens von Fluorharzteilchen zu einer Membran mit einer bestimmten Form und bestimmten Abmessungen,
    einen Backschritt des Zusammenbackens der Fluorharzteilchen durch Erhitzen der in dem Membranbildungsschritt erhaltenen Membran auf einen Schmelzpunkt der Membran oder höher, um eine nichtporöse Membran zu bilden, und
    einen Dehnschritt des Dehnens der nichtporösen Membran, um die nichtporöse Membran porös zu machen, wobei:

ein innerer Teil jedes der Fluorharzteilchen aus einem Polytetrafluorethylen gebildet ist und ein äußerer Oberflächenteil des Teilchens aus einem anderen Polytetrafluorethylen, einem Tetrafluorethylen/Hexafluorpropylen-Copolymer oder einem Tetrafluorethylen/Perfluoralkylether-Copolymer, dessen Schmelzwärme geringer ist als die des einen Polytetrafluorethylens, gebildet ist, und
eine mittlere Durchflussporengröße der mikroporösen Fluorharzmembran 50 nm oder weniger beträgt und eine Differenz zwischen der mittleren Durchflussporengröße und einer maximalen Porengröße der mikroporösen Fluorharzmembran weniger als 15 nm beträgt, wobei die Porengröße wie in der Beschreibung beschrieben gemessen wird.

2. Verfahren zur Herstellung einer mikroporösen Fluorharzmembran gemäß Anspruch 1, wobei jedes der Fluorharzteilchen eine Schicht des Innenteils und eine Schicht des äußeren Oberflächenteils enthält und die Schicht des äußeren Oberflächenteils aus einem Tetrafluorethylen/Hexafluorpropylen-Copolymer, einem Tetrafluorethylen/Perfluoralkylether-Copolymer oder einem modifizierten Polytetrafluorethylen (PTFE), das ein Copolymer aus Hexafluorpropylen (HFP) oder einem Perfluoralkylvinylether (PAVE) und Tetrafluorethylen ist, gebildet ist, wobei das Copolymerisationsverhältnis von HFP oder PAVE zum Tetrafluorethylen 1/20 (Molverhältnis) oder mehr beträgt.

3. Verfahren zur Herstellung einer mikroporösen Fluorharzmembran gemäß Anspruch 1 oder 2, wobei bei der Wärmefluss-Differentialabtastkalorimetrie der Fluorharzteilchen, wobei die Wärmefluss-Differentialabtastkalorimetrie das Erhitzen von Raumtemperatur auf 100 °C mit einer Geschwindigkeit von 50 °C/min, das Erhitzen von 100 °C auf 365 °C mit einer Geschwindigkeit von 10 °C/min, das Abkühlen von 365 °C auf 350 °C mit einer Geschwindigkeit von -10 °C/min, das Halten bei 350 °C über 5 Minuten, das Abkühlen von 350 °C auf 330 °C mit einer Geschwindigkeit von -10 °C/min, das Abkühlen von 330 °C auf 305 °C mit einer Geschwindigkeit von -1 °C/min, das Abkühlen von 305 °C auf 100 °C mit einer Geschwindigkeit von -50 °C/min und das Erhitzen von 100 °C auf 365 °C mit einer Geschwindigkeit von 10 °C/min in dieser Reihenfolge beinhaltet, zwei Schmelzpunktspitzen mit einer Differenz von 15 °C oder mehr beobachtet werden, wenn das Erhitzen von 100 °C auf 365 °C zum zweiten Mal durchgeführt wird.

4. Verfahren zum Herstellen einer mikroporösen Fluorharzmembran gemäß Anspruch 1, wobei ein Wert von (maximale Porengröße - mittlere Durchflussporengröße)/mittlere Durchflussporengröße der mikroporösen Fluorharzmembran 0,5 oder weniger beträgt.

5. Verfahren zum Herstellen einer mikroporösen Fluorharzmembran gemäß Anspruch 4, wobei ein Permeabilitätsindex, der durch die Dicke (nm)/[(mittlere Durchflussporengröße (nm))$^2$ x Gurley-Sekunden] dargestellt wird, der mikroporösen Fluorharzmembran 0,01 oder mehr beträgt.

## Revendications

1. Procédé pour produire une membrane microporeuse en résine fluorée, comprenant :

une étape de formation de membrane consistant à former des particules de résine fluorée dans une membrane ayant une forme particulière et des dimensions particulières ;
une étape de cuisson consistant à cuire ensemble les particules de résine fluorée en chauffant la membrane obtenue dans l'étape de formation de membrane jusqu'au point de fusion de la membrane ou à une température supérieure pour former une membrane non poreuse ; et
une étape d'étirage consistant à étirer la membrane non poreuse pour rendre poreuse la membrane non poreuse, dans lequel :

une partie intérieure de chacune des particules de résine fluorée est composée d'un polytétrafluoroéthylène et une partie de surface extérieure de la particule est composée d'un autre polytétrafluoroéthylène, d'un copolymère de tétrafluoroéthylène/hexafluoropropylène, ou d'un copolymère de tétrafluoroéthylène/perfluoroalkyléther dont la chaleur de fusion est inférieure à celle du premier polytétrafluoroéthylène, et
la taille moyenne des pores de circulation de la membrane microporeuse en résine fluorée est de 50 nm ou moins, et la différence entre la taille moyenne des pores de circulation et la taille maximale des pores de la membrane microporeuse en résine fluorée est inférieure à 15 nm,
dans lequel la taille des pores est mesurée comme décrit dans la description.

2. Procédé pour produire une membrane microporeuse en résine fluorée selon la revendication 1, dans lequel chacune des particules de résine fluorée contient une couche de la partie intérieure et une couche de la partie de surface

extérieure, et la couche de la partie de surface extérieure est composée d'un copolymère de tétrafluoroéthylène/hexafluoropropylène, d'un copolymère de tétrafluoroéthylène/perfluoroalkyléther, ou d'un polytétrafluoroéthylène (PTFE) modifié qui est un copolymère d'hexafluoropropylène (HFP) ou d'un perfluoroalkylvinyléther (PAVE) et de tétrafluoroéthylène où le taux de copolymérisation du HFP ou du PAVE au tétrafluoroéthylène est de 1/20 (rapport en moles) ou plus.

**3.** Procédé pour produire une membrane microporeuse en résine fluorée selon la revendication 1 ou 2, dans lequel, dans une calorimétrie à balayage différentiel en flux de chaleur des particules de résine fluorée, la calorimétrie à balayage différentiel en flux de chaleur comprenant dans l'ordre un chauffage de la température ambiante à 100°C à une vitesse de 50°C/min, un chauffage de 100°C à 365°C à une vitesse de 10°C/min, un refroidissement de 365°C à 350°C à une vitesse de -10°C/min, un maintien à 350°C pendant 5 minutes, un refroidissement de 350°C à 330°C à une vitesse de -10°C/min, un refroidissement de 330°C à 305°C à une vitesse de -1°C/min, un refroidissement de 305°C à 100°C à une vitesse de -50°C/min, et un chauffage de 100°C à 365°C à une vitesse de 10°C/min, deux pics de point de fusion ayant une différence de 15°C ou plus sont observés lorsque le chauffage de 100°C à 365°C est effectué pour la deuxième fois.

**4.** Procédé pour produire une membrane microporeuse en résine fluorée selon la revendication 1, dans lequel la valeur de (taille maximale des pores - taille moyenne des pores d'écoulement) / taille moyenne des pores d'écoulement de la membrane microporeuse en résine fluorée est de 0,5 ou moins.

**5.** Procédé pour produire une membrane microporeuse en résine fluorée selon la revendication 4, dans lequel l'indice de perméabilité représenté par l'épaisseur (nm) / [(taille moyenne des pores d'écoulement (nm))$^2$ x secondes Gurley] de la membrane microporeuse en résine fluorée est de 0,01 ou plus.

FIG. 1

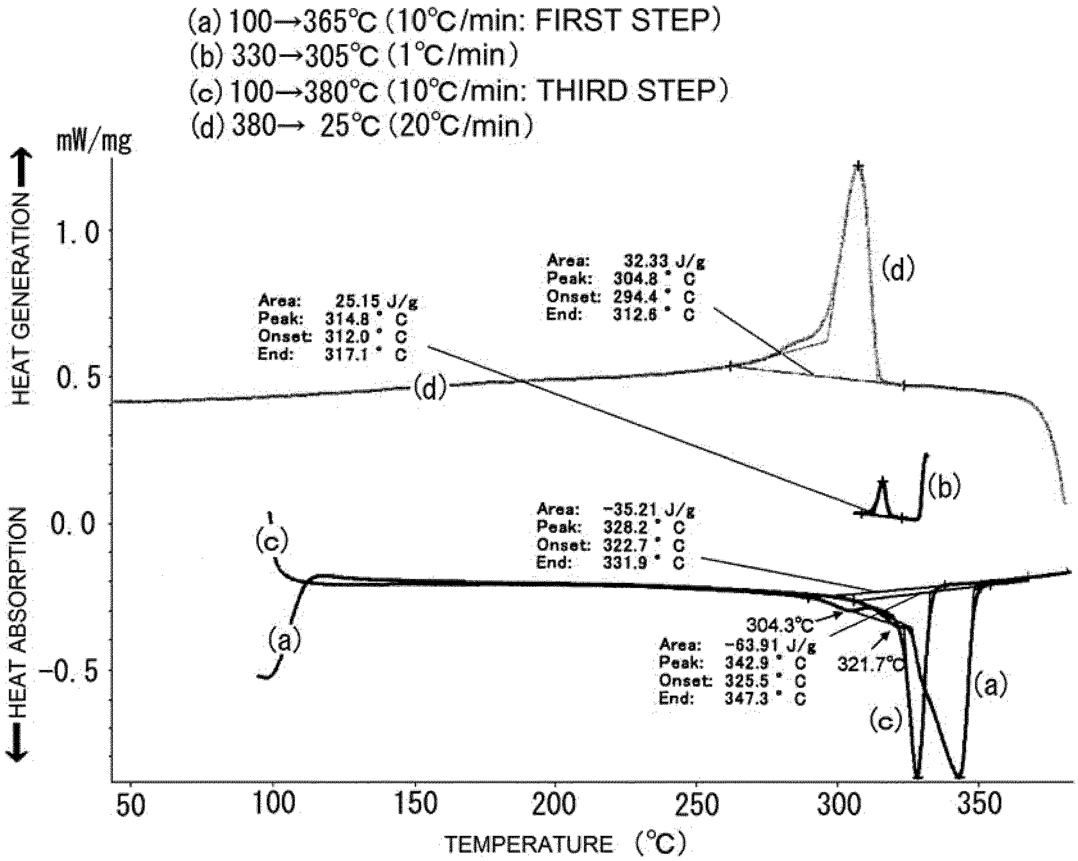
(a) 100→365°C (10°C/min: FIRST STEP)
(b) 330→305°C (1°C/min)
(c) 100→380°C (10°C/min: THIRD STEP)
(d) 380→ 25°C (20°C/min)
mW/mg
HEAT GENERATION
HEAT ABSORPTION
1.0
0.5
0.0
-0.5
Area: 32.33 J/g
Peak: 304.8 ° C
Onset: 294.4 ° C
End: 312.6 ° C
Area: 25.15 J/g
Peak: 314.8 ° C
Onset: 312.0 ° C
End: 317.1 ° C
Area: -35.21 J/g
Peak: 328.2 ° C
Onset: 322.7 ° C
End: 331.9 ° C
304.3°C
Area: -63.91 J/g
Peak: 342.9 ° C
Onset: 325.5 ° C
End: 347.3 ° C
321.7°C
(a)
(b)
(c)
(d)
50
100
150
200
250
300
350
TEMPERATURE (°C)

FIG. 2

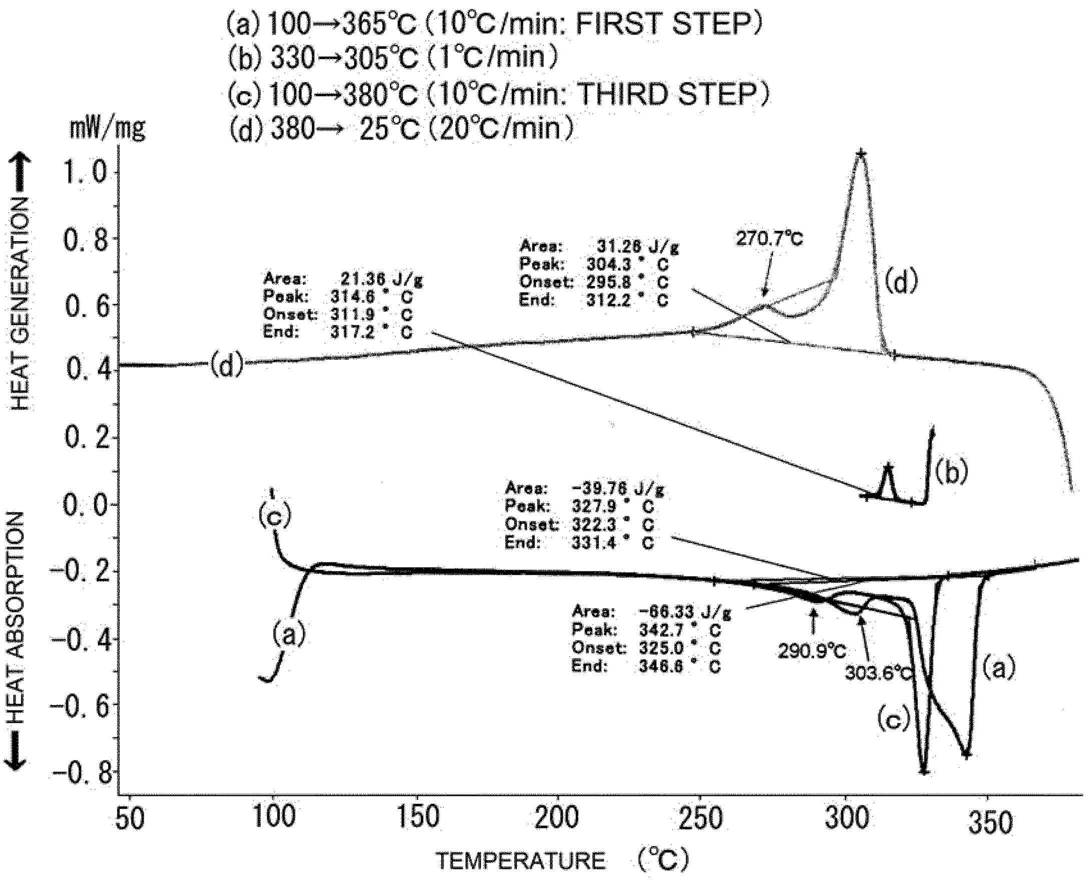
(a) 100→365°C (10°C/min: FIRST STEP)
(b) 330→305°C (1°C/min)
(c) 100→380°C (10°C/min: THIRD STEP)
(d) 380→ 25°C (20°C/min)
mW/mg
HEAT GENERATION
HEAT ABSORPTION
Area: 31.26 J/g
Peak: 304.3 ° C
Onset: 295.8 ° C
End: 312.2 ° C
270.7°C
Area: 21.36 J/g
Peak: 314.6 ° C
Onset: 311.9 ° C
End: 317.2 ° C
Area: -39.76 J/g
Peak: 327.9 ° C
Onset: 322.3 ° C
End: 331.4 ° C
Area: -66.33 J/g
Peak: 342.7 ° C
Onset: 325.0 ° C
End: 346.6 ° C
290.9°C
303.6°C
TEMPERATURE (°C)

FIG. 3

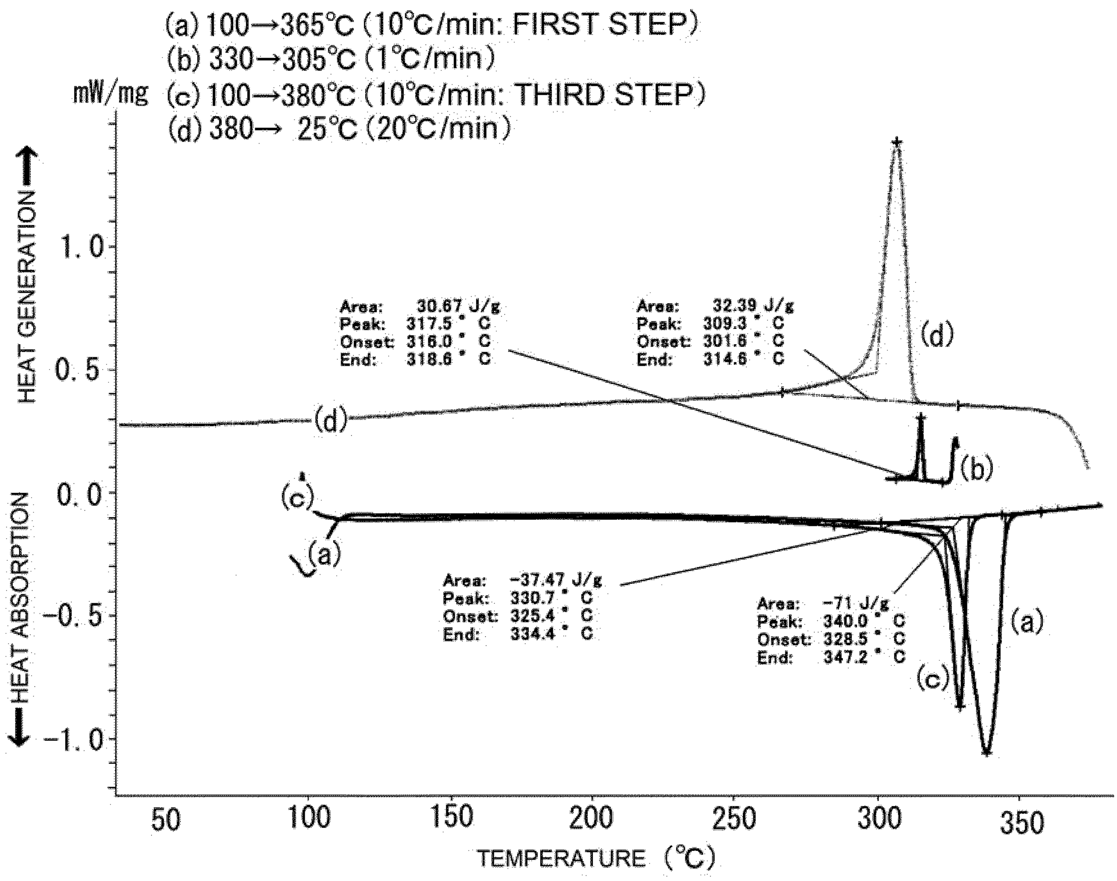
(a) 100→365°C (10°C/min: FIRST STEP)
(b) 330→305°C (1°C/min)
(c) 100→380°C (10°C/min: THIRD STEP)
(d) 380→ 25°C (20°C/min)
mW/mg
HEAT GENERATION
HEAT ABSORPTION
1.0
0.5
0.0
-0.5
-1.0
Area: 30.67 J/g
Peak: 317.5 ° C
Onset: 316.0 ° C
End: 318.6 ° C
Area: 32.39 J/g
Peak: 309.3 ° C
Onset: 301.6 ° C
End: 314.6 ° C
Area: -37.47 J/g
Peak: 330.7 ° C
Onset: 325.4 ° C
End: 334.4 ° C
Area: -71 J/g
Peak: 340.0 ° C
Onset: 328.5 ° C
End: 347.2 ° C
(a)
(b)
(c)
(d)
50
100
150
200
250
300
350
TEMPERATURE (°C)

FIG. 4

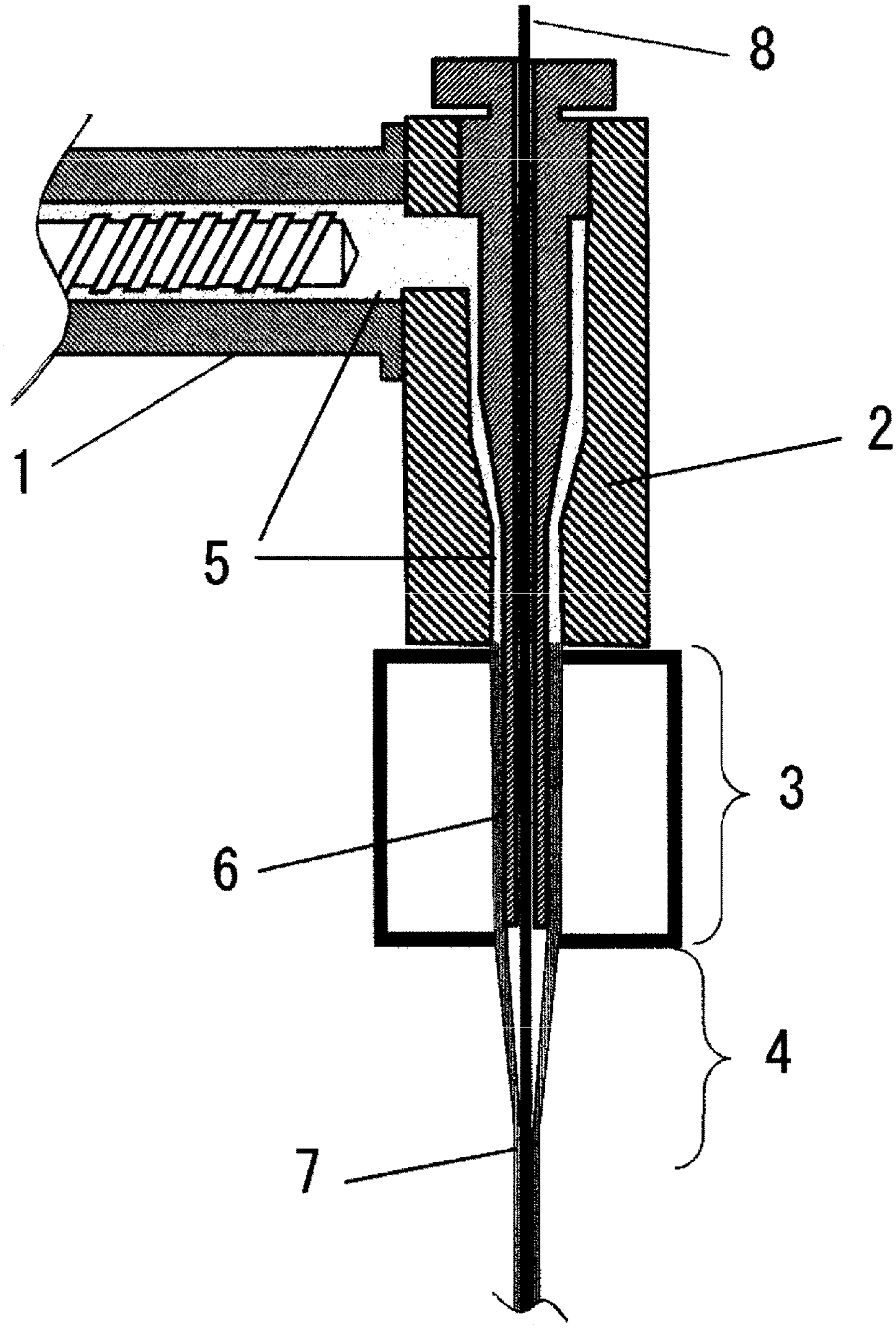

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2067814 A
- GB 2461619 A
- US 2007117935 A
- US 2007117929 A
- JP H0532810 B
- JP 4371176 B
- JP 374643 A
- JP 2009516066 PCT